# EUROPEAN PATENT APPLICATION

(11) **EP 1 692 947 A1**
(43) Date of publication of application: **23.08.2006**
(21) Application number: 06425036.8
(22) Date of filing: 25.01.2006
(51) Int. Cl.: A23K 1/00, A23P 1/02, C05F 3/06, B01J 2/12

(54) **Process for granulation of pellets for products such as fertilizers and fodders**

(30) Priority: 25.01.2005 IT MI20050093
(71) Applicant: Unimer Spa, 20121 Milano (IT)
(72) Inventor: Di Majo, Roberto, 20121 Milano (IT)

(57) **Abstract**

Unimer SpA filled the gap by implementing a new manufacturing process able to combine the advantages of:
- pellets largest and most flexible material use
- granules easiest and most precise spreading

The manufacturing process foresees two different steps: a first pelleting phase followed by the granules production.

Once manufactured, the pellets are kept wet, by spraying appropriate liquids which allows the external surface to remain soft, ready for the granulation process.

The pellets are then put into a granulating equipment, which could be a rotating cylinder or whatever container fit to ensure an inside rotation.

The pellets are gradually shaped into regular spherical granules via the rotating movement of the granulating equipment, whilst the dispersed materials thicken around the shaping granules.

A drying process is requested to eliminate the excess of water in the granules to achieve the appropriate humidity level and get them solid and resistant to mechanical stress.

A cooling is aimed to conform the granules to the ambient temperature.

## Description

### PREMISES

Pelleting is a standard manufacturing process which pursues the objective of mixing together materials as powders, flours, moulds, mud, crystals, granules with different textures and obtaining small, regular, solid cylindrical shaped pellets of 1-2 cm diameter.

The pellets convey an improved convenience of use, being fit for advanced mechanical application with spreaders or simplified distribution by hand.

Despite the positive impact registered with the pellets growing use in the agriculture and animal feeding sectors, their cylindrical shape could sometimes result into unsolved application problems, especially in case of improved fluidity requested by more sophisticated shifting and spreading equipments.

A spherical shape could be highly advantaged, to ensure homogeneous, precise and smooth spreading of the product.

So far the standard granulation process, by which the spherical granules are obtained, did not allow the exploitation of the large variety of materials otherwise used in the pelleting process.

Unimer SpA filled the gap by implementing a new manufacturing process able to combine the advantages of:
- pellets largest and most flexible material use
- granules easiest and most precise spreading

The manufacturing process foresees two different steps: a first pelleting phase followed by the granules production.

The initial riddling of row materials allows the elimination of all extraneous staff and amassments. The accurate dosing of all components is followed by their mixing together to proceed with the pressing phase to get the pellets.

### a) PELLETING PROCESS

Pelleting procedures could vary depending on the different materials or press used.

The process does not change for all the extrusion press, both with ring and radial holes or horizontal press and is not affected by the pellet size.

The pellet sizes are strictly dependent on the final granules sizes to be produced.

The length sizing is regulated through blades, situated close to the draw-plate, to obtain a measure very closed to the width or diameter.

Once manufactured, the pellets are kept wet, by spraying appropriate liquids which allows the external surface to remain soft, ready for the granulation process.

### b) GRANULATION PROCESS

The pellets are then put into a granulating equipment, which could be a rotating cylinder or whatever container fit to ensure an inside rotation.

The internal walls of the granulating equipment could differ depending on:
- materials used
- sizes and characteristics of the pellets
- liquid used
- presence of possible agglomerating substances
   Therefore they could
- carry different devices such as contrasts, helical mechanisms, blades..
- be perfectly smooth

The pellets are gradually shaped into regular spherical granules via the rotating movement of the granulating equipment, whilst the dispersed materials thicken around the shaping granules. During this phase the addition of further liquids could be appropriate also to provide a protective covering for the granules.

The granulating equipment should be provided with devices to regulate the rotating speed and the inclination of the whole system to control the length of the operation, the quantity of material worked in the unit of time, the mechanical parameters of the granulating process.

This process allows the transformation of pellets obtained through an extrusion press into granules with the same chemical/physical composition.

The powders and little fragments generated within the pelleting phase are gradually thickened into the granules during the rotation phase.

The next stages for the granules are the drying and cooling ones.

### c) DRYING PROCESS

It is requested to eliminate the excess water in the granules to achieve the appropriate humidity level and get them solid and resistant to mechanical stress.

The process is obtained with dryers, which can be both rotating or with a fluid bed, forcing a draught of hot air through the granules, still as well as in movement via ad-hoc devices.

### d) COOLING PROCESS

It is aimed to conform the granules to the ambient temperature. The cooling device is strictly depend on the granules characteristics and the temperatures registered during the drying process.

### e) FINAL SCREENING

It is the final stage and allows the elimination of:
- granules exceeding or not conforming to the established standards
- the powder component
   It could take place through a fixed or mobile sieve.

### THE PROCESS SCHEME

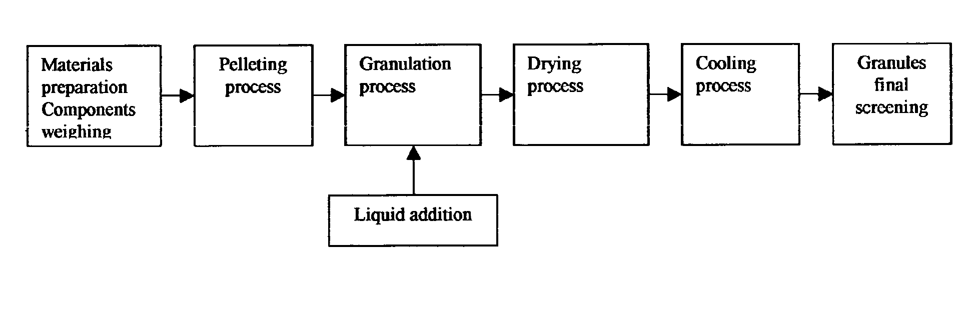

## Claims

1. Industrial process suitable for the granulation of fertilizers, feed and every kind of product standing from a preliminary pelleting process.
